# EUROPÄISCHE PATENTSCHRIFT

(11) **EP 0 998 111 B1**
(45) Veröffentlichungstag und Bekanntmachung des Hinweises auf die Patenterteilung: **29.12.2004**
(21) Anmeldenummer: 98120504.0
(22) Anmeldetag: 29.10.1998
(51) Int. Cl.: H04M 19/00, H04M 3/00

(54) **Schaltungsanordnung zum Speisen einer Telefonteilnehmerschleife mit einer Speisespannung**
Circuit arrangement for feeding a telephone subscriber loop
Circuit pour l'alimentation d' une boucle d'abonné

(43) Veröffentlichungstag der Anmeldung: 03.05.2000
(73) Patentinhaber: Infineon Technologies AG, 81669 München (DE)
(72) Erfinder: Heise, Bernd, 81825 München (DE)
(74) Vertreter: Charles, Glyndwr

(56) Entgegenhaltungen:
- EP-A- 0 663 755
- US-A- 5 661 794
- INABE Y ET AL: "A TWO-CHIP SET FOR SLIC" REVIEW OF THE ELECTRICAL COMMUNICATION LABORATORIES, Bd. 36, Nr. 6, November 1988, Seiten 561-565, XP000031856

## Beschreibung

Die Erfindung betrifft eine Schaltungsanordnung zum Speisen einer Telefonteilnehmerschleife mit einer Speisespannung, zum Senden eines Sendesignals in die Telefonteilnehmerschleife und zum Empfangen eines Empfangssignals von der Telefonteilnehmerschleife. Die Erfindung betrifft darüber hinaus eine Verwendung der Schaltungsanordnung. Die Erfindung betrifft ferner einen Chipsatz zum Speisen einer Telefonteilnehmerschleife mit einer Speisespannung, zum Senden eines Sendesignals in die Telefonteilnehmerschleife und zum Empfangen eines Empfangssignals von der Telefonteilnehmerschleife.

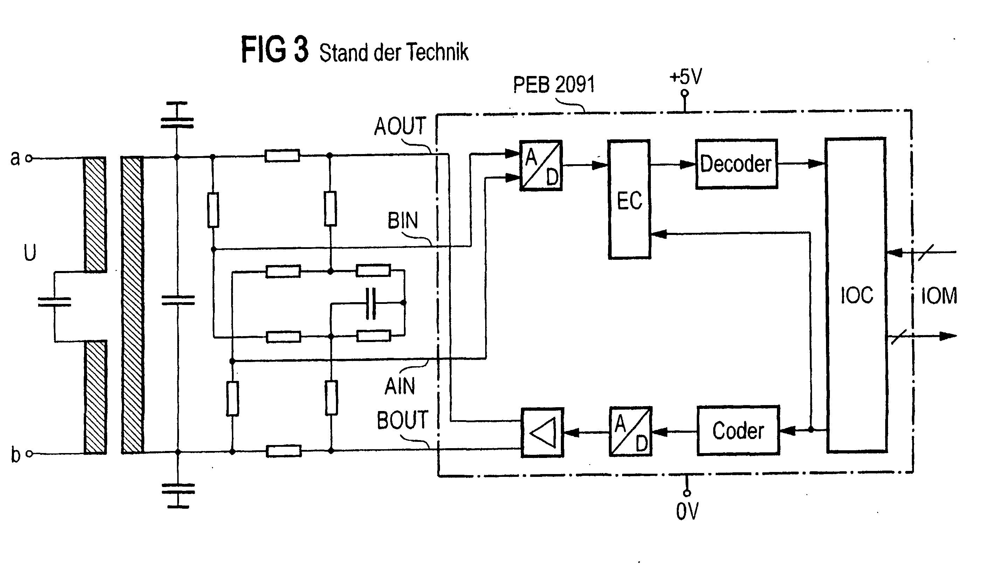

In Figur 3 ist schematisch eine bekannte Anordnung gezeigt mit der die Speisung einer ISDN-Teilnehmerschleife a, b durch Beschaltung des von der Anmelderin unter der Bezeichnung PEB 2091 erhältlichen Halbleiterbauelements erreicht werden kann. Während an den Enden a, b der Teilnehmerschleife eine Spannung von über 100 V gewährleistet sein muß, wird das Halbleiterbauelement PEB 2091 mit der üblichen Betriebsspannung von etwa 5 V betrieben. Die Spannung wird dazu auf der Primärwicklung eines Transformators aufgeprägt, während auf die Sekundärwicklung die Nutzsignale von der Teilnehmerschleife ein- und ausgekoppelt werden. An der Sekundärseite des Transformators ist eine Gabelschaltung vorgesehen, die die bidirektionalen Signale auf der Teilnehmerschleife in die richtungsgetrennten Signale AIN, BIN und AOUT, BOUT vornimmt. Die Signalleitungen AIN, BIN und AOUT, BOUT sind mit geeigneten Anschlüssen des Halbleiterbauelements PEB 2091 verbunden, um darin verarbeitet zu werden. Dazu gehören in der Empfangsrichtung ein Analog-Digital-Wandler, ein Echokompensator EC, ein Decodierer und eine Ein-/Ausgabeeinrichtung IOC. In umgekehrter Richtung laufen die Sendesignale von der Ein/Ausgabeeinrichtung IOC zu einem Codierer, weiter über einen Digital-Analog-Wandler und über einen Ausgangspuffer auf die Ausgangsleitungen AOUT und BOUT. Über den Transformator werden die Sendesignale Teilnehmerschleife a, b aufgeprägt, und die Empfangssignale werden über den Transformator eingekoppelt. Nachteilig bei dieser Anordnung ist der aufwendige Transformator, der in hoher Präzision ausgeführt sein muß, um eine sichere Ein- und Auskoppelung der Signale zu gewährleisten.

Aus der EP 0 663 755 ist eine Schaltungsanordnung zur Speisung einer Teilnehmeranschlußleitung bekannt geworden. Diese Schaltungsanordnung eignet sich besonders vorteilhaft für herkömmliche, analoge Teilnehmeranschlußleitungen. Die Übertragung dieses Speisekonzeptes auf ISDN-Teilnehmeranschlußleitungen erweist sich als problematisch, weil die von dieser Schaltungsanordnung, die ohne Transformator auskommt, erzeugten Verlustleistungen nicht akzeptabel sind. Bei einer analogen Teilnehmeranschlußleitung wird von einer Betriebszeit von 1 % ausgegangen, während der die Speisung der Teilnehmeranschlußleitung erforderlich ist. Demgegenüber wird bei ISDN-Teilnehmeranschlußleitungen von einer Betriebszeit von 40 % ausgegangen, während der die volle Speisung der Teilnehmeranschlußleitung erforderlich ist. Bei einer ISDN- Teilnehmeranschlußleitung ist auch außerhalb der Betriebszeit das Anliegen der Speisespannung erforderlich, um den Netzabschluß NT des Teilnehmers im Ruhemodus mit Energie zu versorgen. Eine schwankende Speisespannung auf einer analogen Teilnehmeranschlußleitung ist wegen der verwendeten Analogtechnik unkritisch für das Funktionieren des Gesamtsystems. Demgegenüber bricht bei einer ISDN-Teilnehmeranschlußleitung die Verbindung zusammen, wenn die Speisung des Netzabschlusses NT des Teilnehmers unter einen Minimalwert fällt. Die Schaltungsanordnung aus der EP 0 663 755 ist wegen der hohen Verlustleistung zum Einsatz an einer ISDN-Teilnehmeranschlußleitung nicht geeignet.

Das technische Problem der Erfindung besteht daher darin, eine Schaltungsanordnung anzugeben, die mit möglichst wenigen aufwendigen diskreten Bauelementen auskommt und dabei eine niedrige Verlustleistung gewährleistet.

Das Problem wird gelöst mit einer Schaltungsanordnung mit den Merkmalen von Patentanspruch 1. Das Problem wird ferner gelöst mit einem Chipsatz mit den Merkmalen von Patentanspruch 18. Eine Verwendung der Schaltungsanordnung ist in Patentanspruch 17 angegeben. Vorteilhafte Ausgestaltungen der Erfindung ergeben sich aus den jeweiligen Unteransprüchen.

Eine Ausführungsform der Erfindung besteht in einer Schaltungsanordnung zum Speisen einer Teilnehmerschleife mit einer Speisespannung, zum Senden eines Sendesignal in die Telefonteilnehmerschleife und zum Empfangen eines Empfangssignals von der Teilnehmerschleife. Die Teilnehmerschleife ist über ein erstes Ende und ein zweites Ende mit der Schaltungsanordnung verbindbar. Die Schaltungsanordnung weist eine Speisespannungsquelle mit einer ersten Klemme und einer zweiten Klemme auf, zwischen denen eine Speisespannung liegt. Die Schaltungsanordnung weist ferner eine erste Schaltung auf, die mit dem ersten Ende der Teilnehmerschleife verbunden ist, wobei die erste Schaltung einen ersten und einen zweiten Versorgungsspannungsanschluß aufweist. Die Schaltungsanordnung weist schließlich eine zweite Schaltung auf, die mit dem zweiten Ende der Teilnehmerschleife verbunden ist, wobei die zweite Schaltung einen dritten und einen vierten Versorgungsspannungsanschluß aufweist. Dabei ist der erste Versorgungsspannungsanschluß der ersten Schaltung mit der ersten Klemme der Speisespannungsquelle verbunden, und der vierte Versorgungsspannungsanschluß der zweiten Schaltung ist mit der zweiten Klemme der Speisespannungsquelle verbunden.

Der Vorteil dieser Schaltungsanordnung liegt darin, daß durch geeignete Wahl der Speisespannung und der Versorgungsspannungen der ersten und zweiten Schaltung einerseits eine vorbestimmte Batteriespannung zwischen den Enden der Telefonteilnehmerschleife gewährleistet werden kann und andererseits über die erste und zweite Schaltung im Bereich von deren Versorgungsspannungen ein Nutzsignal der Teilnehmerschleife aufgeprägt werden kann und von der Teilnehmerschleife eingekoppelt werden kann. Die Schaltung kommt dabei ohne Transformator aus. Die Verlustleistung in der ersten und zweiten Schaltung ist auf ein Minimum reduziert, weil sich verlustbehaftete Spannungsabfälle nicht an der Höhe der Speisespannungsquelle orientieren sondern an der Höhe der Versorgungsspannung der ersten und zweiten Schaltung.

In einer bevorzugten Ausführungsform ist die Spannung zwischen den ersten und dem zweiten Versorgungsspannungsanschluß und die Spannung zwischen dem dritten und dem vierten Versorgungsspannungsanschluß der ersten bzw. der zweiten Schaltung wesentlich kleiner als die Speisespannung gewählt. Der Wahl einer besonders kleinen Versorgungsspannung für die erste und zweite Schaltung kann die Verlustleistung der Schaltungsanordnung auf ein Minimum reduziert werden.

In weiterhin bevorzugten Ausführungsform weisen die erste und die zweite Schaltung jeweils eine Ausgangstreiberschaltung auf, die mit dem ersten Ende bzw. dem zweiten Ende der Teilnehmerschleife verbunden sind. Auf diese Weise kann der Teilnehmerschleife ein Nutzsignal aufgeprägt werden. Ferner ist bevorzugt, das die erste und die zweite jeweils eine Strommeßeinrichtung aufweisen, die den Strom am ersten Ende bzw. am zweiten Ende der Teilnehmerschleife messen und die gemessenen Werte ausgeben. Auf diese Weise kann ein Nutzsignal von der Teilnehmerschleife ausgekoppelt werden. In einer weiter bevorzugten Ausführungsform geben die erste und die zweite Schaltung jeweils ein Steuersignal zum Steuern des Stroms am ersten Ende und am zweiten Ende der Teilnehmerschleife aus. Mit diesem Signal kann eine Schaltung zur Überstrombegrenzung angesteuert werden.

In einem besonders bevorzugten Ausführungsbeispiel geben die erste und die zweite Schaltung ein erstes bzw. ein zweites Eingangssignal aus, das dem Empfangssignal von der Teilnehmerleitung entspricht, und empfangen ein erstes bzw. ein zweites Ausgangssignal, das dem Sendesignal in die Telefonteilnehmerleitung entspricht. Sowohl die erste als auch die zweite Schaltung stellen aus diese Weise eine Zweidraht-Vierdraht-Umsetzung der Signale bereit. Das erste und das zweite Eingangssignal sowie das erste und das zweite Ausgangssignal entsprechen dabei den Nutzsignalen auf der Teilnehmerschleife in Empfangsrichtung, das heißt von der Teilnehmerschleife zur Schaltungsanordnung, und in Senderichtung, das heißt von der Schaltungsanordnung zur Teilnehmerschleife.

In einer ganz besonders bevorzugten Ausführungsform sind das erste und das zweite Eingangssignal sowie das erste und das zweite Ausgangssignal digitale Signale. Diese werden vorzugsweise durch entsprechende Analog-Digital-Wandler und Digital-Analog-Wandler in der ersten und zweiten Schaltung erzeugt. Die Verwendung digitaler Signale hat den Vorteil, das sie leichter zu regenerieren sind und somit der Einfluß von Störungen minimiert werden kann.

Es ist ganz besonders bevorzugt, daß die erste Schaltung und die zweite Schaltung identisch aufgebaut sind. Dies hat den Vorteil, das nur ein einziger Schaltungsentwurf durchgeführt werden muß, der sich sowohl für die erste Schaltung als auch für zweite Schaltung eignet. Ähnliche Vorteile ergeben sich bei der Herstellung und beim Einsatz der ersten und der zweiten Schaltung in einer erfinderischen Schaltungsanordnung.

Eine besonders bevorzugte Ausführungsform der Schaltungsanordnung der Erfindung weist eine dritte Schaltung auf, die mit der ersten Schaltung und der zweiten Schaltung auf galvanisch getrennte Weise verbunden ist. Die dritte Schaltung stellt dabei die Ausgangssignale OUT1, OUT2 bereit und verarbeitet die ankommenden Eingangssignale IN1, IN2. Die galvanische Trennung hat den Vorteil, daß die dritte Schaltung auf Spannungspegeln betrieben werden kann, die von den Spannungspegeln der ersten und zweiten Schaltung unabhängig sind. Es wird dabei ganz besonders bevorzugt, als galvanisch getrennte Verbindung zwischen der ersten Schaltung und der dritten Schaltung und zwischen der zweiten Schaltung und der dritten Schaltung durch Kondensatoren erfolgt. Kondensatoren als galvanische Trennelemente haben den Vorteil, daß sie preisgünstig bei relativ hoher Präzision herstellbar und in dem erforderlichen Dimensionierungsbereich ein geringes Bauvolumen gegenüber der Alternative eines Transformators aufweisen.

In einer bevorzugten Ausführungsform weist die dritte Schaltung eine Steuereinrichtung auf, die die erste, zweite und dritte Schaltung steuert. Dabei erfolgt die Steuerung der ersten und der zweiten Schaltung vorzugsweise durch Zeitmultiplex eines Steuersignals im ersten und zweiten Ausgangssignal.

In einer weiterhin bevorzugten Ausführungsform der Schaltungsanordnung weist die dritte Schaltung eine Echolöscheinrichtung auf. Ferner ist bevorzugt, daß die dritte Schaltung eine Codierschaltung zum Codieren der Ausgangssignale aufweist. In einer besonders bevorzugten Ausführungsform der Schaltungsanordnung bewirkt die Steuereinrichtung der dritten Schaltung eine Arbeitspunktregelung der Schaltungselemente zur Erzielung eines linearen Sendesignals auf der Teilnehmerschleife bei sich ändernder Stromaufnahme.

Die Schaltungsanordnung der Erfindung eignet sich besonders für Telefonteilnehmerschleifen des ISDN (Integrated Services Digital Network, dienste-integrierendes digitales Netzwerk). Sie eignet sich besonders für die Leitungscodierungen 2B1Q, 4B3D und Up0. Die Schaltungsanordnung eignet sich in gleicher Weise für eine S-Interface-Schaltung des ISDN. Schließlich ist die Schaltungsanordnung besonders vorteilhaft anwendbar für den Abschluß einer Teilnehmerschleife bei ADSL (Asynchronous Digital Subscriber Line), MDSL (Multirate Digital Subscriber Line), HDSL (High bit rate Digital Subscriber Line), SDSL (Single pair or Symmetric Digital Subscriber Line) und VDSL (Very high bit rate Digital Subscriber Line).

Ein chipsatz zum Speisen einer Teilnehmerschleife mit einer Speisespannung, zum Senden eines Sendesignals in die Telefonteilnehmerschleife und zum Empfangen eines Empfangssignals von der Teilnehmerschleife, wobei die Teilnehmerschleife eine erste Leitung und eine zweite Leitung aufweist, weist auf: einen ersten Chip der mit der ersten Leitung verbindbar ist, eine erstes Eingangssignal an die erste Leitung ausgibt und ein erstes Ausgangssignal der ersten Leitung empfängt; einen zweiten Chip, der mit der zweiten Leitung verbindbar ist, ein zweites Eingangssignal an die zweite Leitung ausgibt und ein zweites Ausgangssignal von der zweiten Leitung empfängt. Der erste und der zweite Chip sind identisch und erfordern eine Versorgungsspannung, die wesentlich niedriger als die Speisespannung ist. Mit einem derartigen Chipsatz kann preisgünstig ein Leitungsabschluß für eine Telefonteilnehmerschleife bereitgestellt werden.

Es ist bevorzugt, daß der Chipsatz einen dritten Chip aufweist, das erste und das zweite Eingangssignal empfängt und das erste und das zweite Ausgangssignal ausgibt. Vorteilhafterweise findet in dem dritten Chip eine Vorverarbeitung der Ein- und Ausgangssignale statt. Der dritte Chip weist dazu vorzugsweise eine Echolöscheinrichtung auf, die das Echo des Senders auf der Teilnehmerschleife löscht. Es wird dabei ganz besonders bevorzugt, das der dritte eine Ein- / Ausgabeeinrichtung für eine PCM-Bus aufweist.

Weitere Vorteile, Merkmale und Anordnungsmöglichkeiten der Erfindung ergeben sich aus der nachfolgenden Beschreibung von Ausführungsbeispielen in Verbindung mit der schematischen zeichnung. In der Zeichnung zeigen:
- Figur 1:: ein erstes Ausführungsbeispiel der Schaltungsanordnung der Erfindung;
- Figur 2: ein zweites Ausführungsbeispiel der Schaltungsanordnung der Erfindung und
- Figur 3: eine Schaltungsanordnung nach dem Stand der Technik.

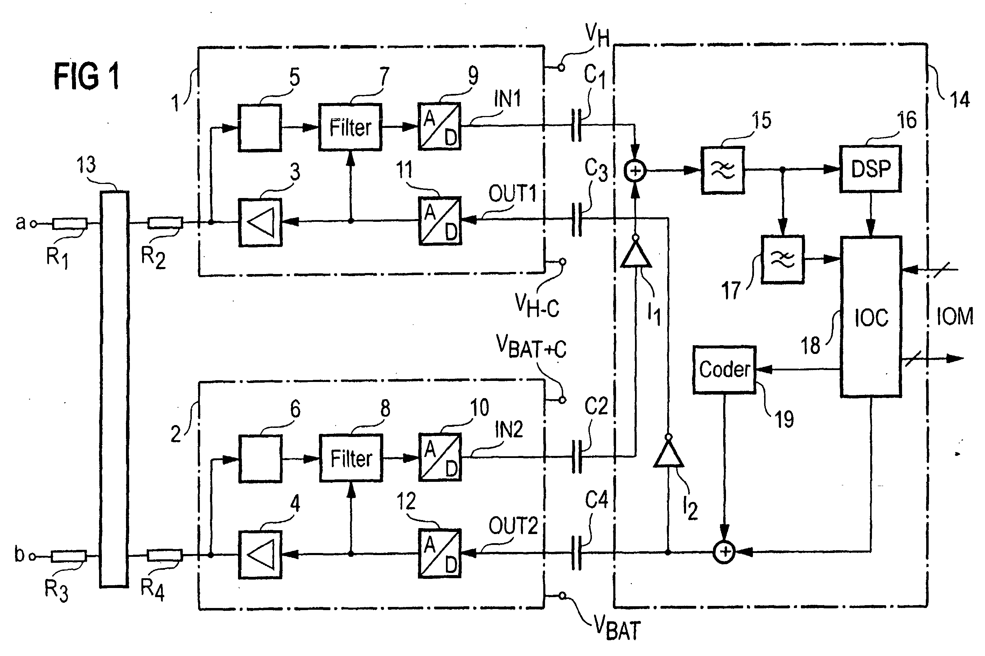

Fig. 1 zeigt ein erstes Ausführungsbeispiel der Erfindung. Es sind die Enden a und b einer Telefonteilnehmerschleife dargestellt, die über die Widerstände R1 beziehungsweise R3, über eine Überstromschutzschaltung 13 und über die Widerstände R2 beziehungsweise R4 mit den Schaltungen 1 und 2 einer Leitungsabschlußschaltung verbunden sind. In den Schaltungen 1 und 2 wird jeweils eine Richtungstrennung der Signale auf der Teilnehmerschleife ausgeführt. Die Schaltungen 1 und 2 geben somit Signale, die von der Teilnehmerschleife zur Leitungsabschlußschaltung gerichtet sind, als digitale Ausgangssignale IN1 beziehungsweise IN2 aus. In umgekehrter Richtung empfangen die Schaltungen 1 und 2 digitale Eingangssignale OUT1 beziehungsweise OUT2, um sie als Sendesignale von der Leitungsabschlußschaltung zur Teilnehmerschleife in die Teilnehmerschleife einzukoppeln.

Die Schaltung 1 weist auf der Seite der Teilnehmerschleife einen Ausgangspuffer 3 auf, der dem Ende a der Teilnehmerschleife über die Widerstände R2 und R1 eine Spannung aufprägt. Die Schaltung 1 weist ferner eine Strommeßeinrichtung 5 auf, die den Strom an der Verbindugnsstelle zwischen dem Ende a der Teilnehmerschleife und der Schaltung 1 mißt. Der gemessene Stromwert enthält ein von der Teilnehmerschleife einzukoppelndes Signal, das dem vom Ausgangspuffer 3 aufgeprägten Signal überlagert ist. Der von der Strommeßeinrichtung 5 ermittelte Stromwert wird einem Filter 7 zugeführt, in dem das Sendesignal, das dem Ausgangspuffer 3 zugeführt wird, subtrahiert wird. Das Ausgangssignal des Filters 7 wird einem Analog-Digital-Wandler 9 zugeführt, der daraus ein digitales Ausgangssignal IN1 erzeugt. Das der Teilnehmerschleife aufzuprägende Sendesignal wird von der Schaltung 1 als digitales Eingangssignal OUT1 empfangen, um über einen Digital-Analog-Wandler 11 als analoges Signal dem Ausgangspuffer 3 und dem Filter 7 zugeführt zu werden.

Aufbau und Funktion der Schaltung 2 sind identisch mit Aufbau und Funktion der Schaltung 1, wie sie oben beschrieben sind. Dabei ist ein Ausgangspuffer 4 über den Widerstand R4 und den Widerstand R3 mit dem Ende b der Telefonteilnehmerleitung verbunden. Eine Strommeßeinrichtung 6 mißt den Strom am Ende b der Teilnehmerschleife und liefert den Meßwert an ein Filter 8. Das Ausgangssignal des Filters 8 wird einem Analog-Digital-Wandler 10 zugeführt, der daraus ein digitales Ausgangssignal IN2 erzeugt. In umgekehrter Übertragungsrichtung bildet ein Digital-Analog-Wandler 12 aus einem digitalen Eingangssignal OUT2 ein der Teilnehmerschleife über den Ausgangspuffer 4 aufzuprägendes Signal. Die Filter 7 und 8, die Analog-Digital-Wandler 9 und 10 und die Digital-Analog-Wandler 11 und 12 sind im gezeigten Ausführungsbeispiel in jeweils als geschaltetes Kapazitätsnetzwerk ausgeführt. Die geschalteten Kapazitätsnetzwerke in den Schaltungen 1 und 2 werden jeweils von einem gemeinsamen Taktsignal angesteuert.

Die Schaltung 1 weist die Versorgungsspannungsanschlüsse VH und V_{H-C} auf, und die Schaltung 2 weist die Versorgungsspannungsanschlüsse V_{BAT+C} und V_{BAT} auf. Die Spannungsdifferenz zwischen V_{H} und V_{H-C} und die Spannungsdifferenz zwischen V_{BAT+C} und V_{BAT} beträgt in beiden Fällen V_{C}, wobei V_{C} bis zu 6 Volt beträgt und somit im Bereich üblicher Versorgungsspannungen für CMOS-Halbleiterbauelemente liegt. Die Spannungsdifferenz zwischen V_{H} und V_{BAT} beträgt etwa 110 Volt. Da der Ausgangspuffer 3 eine Spannung zwischen V_{H} und V_{H-C} ausgibt und der Ausgangspuffer 4 eine Spannung zwischen V_{BAT+C} und V_{BAT} ausgibt, liegt zwischen den Ausgangsanschlüssen der Ausgangspuffer 3 und 4 eine Spannung, die maximal V_{H} - V_{BAT} und minimal V_{H}- V_{BAT} - 2 V_{C} beträgt. Bei entsprechender Dimensionierung von V_{H}, V_{BAT} und V_{C} können die Anforderungen an die Speisung einer Telefonteilnehmerschleife erfüllt werden.

Die Leitungen der Signale IN1, OUT1 und IN2, OUT2 der Schaltungen 1 beziehungsweise 2 sind über Kondensatoren C1, C2, C3 und C4 mit einer Digitalschaltung 14 verbunden. Das Signal IN1 wird durch die Schaltung 1 über den Kondensator C1 einem Summationsglied zugeführt, dessen Ausgangssignal einem digitalen Tiefpaßfilter 15 einer Empfangssignalanordnung der Schaltung 14 zugeführt wird. Andererseits wird das Signal IN2 durch die Schaltung 2 über den Kondensator C2 und den Invertierer I1 dem Summationsglied zugeführt. Der Invertierer I1 stellt sicher, daß das von der Teilnehmerleitung empfangene Nutzsignal an dem Summationsglied konstruktiv überlagert wird. Das Signal OUT1 wird durch die Schaltung 1 über einen Kondensator C3 und einen Invertierer I2 von einer Sendesignalanordnung der Schaltung 14 empfangen. Das Signal OUT2 wird durch die Schaltung 2 über den Kondensator C4 von der Sendesignalanordnung der Schaltung 14 empfangen. Der Invertierer 12 gewährleistet, daß die Ausgangspuffer 3 und 4 in den Schaltungen 1 beziehungsweise 2 gegensinnig im Push-Pull-Betrieb arbeiten.

Zur Sendesignalanordnung der Schaltung 14 gehören eine Ein/Ausgabe-Steuereinrichtung 18, ein Leitungscodierer 19 und ein Summationsglied. Die Steuereinrichtung 18 übergibt ein zu sendendes Steuersignal an den Leitungsocodierer 19, der das codierte Signal dem Summationsglied zuführt. Im Ausführungsbeispiel führt der Codierer 19 eine 2B1Q-Codierung (2 Bit ergeben ein Quaternärsymbol) gemäß den Vorschriften des ISDN aus. Andererseits wird dem Summationsglied durch die Steuereinrichtung ein Signal zugeführt, mit dem die Arbeitspunkte der Bauelemente der Schaltungsanordnung bei wechselnden Lastverhältnissen am Netzabschluß des fernen Teilnehmers geregelt werden können.

Zur Empfangssignalanordnung der Schaltung 14 gehören das Filter 15, eine digitale Signalverarbeitungseinrichtung 16, weiteres Tiefpaßfilter 17, und die Steuereinrichtung 18. Die Signalverarbeitungseinrichtung 16 führt die Funktion einer Echolöscheinrichtung und einer Leitungsdecodiereinrichtung aus. Das separate Filter 17 dient der Ermittlung des Gleichstromanteils auf der Teilnehmerschleife. Das Ergebnis wird der Steuereinrichtung 18 zur weiteren Verarbeitung zugeführt. Die Steuereinrichtung empfängt die in die Teilnehmerschleife zu sendenden Signale und sendet die von der Teilnehmerschleife empfangenen Signale über ein Bussystem IOM (ISDN Oriented Modular), das in der ISDN-Technik hinreichend bekannt ist.

Durch die von den Kondensatoren C1 bis C4 gewährleistete galvanische Trennung zwischen den Schaltungen 1 und 2 einerseits und der Schaltung 14 andererseits kann die Schaltung 14 mit Versorgungsspannungspegeln betrieben werden, die von den Versorgungspannungspegeln der Schaltungen 1 und 2 unabhängig sind. Vorzugsweise wird ein Versorgungsspannungspegel gewählt, der jenem von üblichen CMOS-Halbleiterbauelementen entspricht.

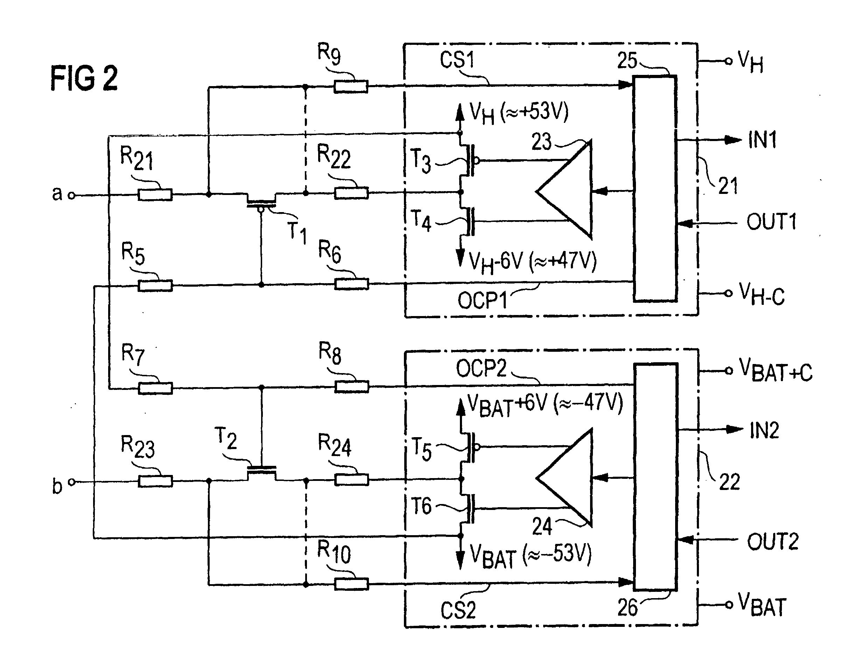

Figur 2 zeigt ein zweites Ausführungsbeispiel der Erfindung. Es sind Schaltungen 21 und 22 gezeigt, die den Schaltungen 1 beziehungsweise 2 des Ausführungsbeispiels von Fig. 1 entsprechen. Ein Schaltungsblock 25 von Schaltung 21 beinhaltet dabei im wesentlichen Funktionen, wie sie durch das Filter 7, den Analog-Digital-Wandler 9 und den Digital-Analog-Wandler 11 in dem Ausführungsbeispiel von Fig. 1 ausgeführt werden. Ein Operationsverstärker 23 mit Gleichtakt-Ausgangssignalen steuert Transistoren T3 und T4 an, an denen ein Ausgangssignal abgegriffen werden kann. Dies entspricht im wesentlichen der Funktionalität des Ausgangspuffers 3 in dem Ausführungsbeispiel der Fig. 1. In ähnlicher Weise weist die Schaltung 22 einen Schaltungsblock 26 auf, der im wesentlichen dem Filter 8, dem Analog-Digital-Wandler 10 und dem Digital-Analog-Wandler 12 in dem Ausführungsbeispiel von Fig. 1 entspricht. Ein Operationsverstärker 24, dessen Gleichtakt-Ausgänge mit einer Transistoranordnung aus Transistoren T5 und T6 verbunden sind, bildet zusammen mit der Transistoranordnung eine Funktionalität, die im wesentlichen dem Ausgangspuffer 4 in dem Ausführungsbeispiel von Fig. 1 entspricht.

Der Ausgangsanschluß der Transistoranordnung T3, T4 ist über einen Widerstand R22, die Laststrecke eines Transistors T1 und über einen Widerstand R21 mit dem Ende a der Teilnehmerschleife verbunden. Andererseits ist der Ausgangsanschluß der Transistoranordnung T5, T6 über einen Widerstand R24, die Laststrecke eines Transistors T2 und einen Widerstand R23 mit dem Ende b der Teilnehmerschleife verbunden. Die Strommessung am Ende a der Teilnehmerschleife erfolgt mittels eines Signals CS1 (current sensing) über einen Widerstand R9 durch Abgriff an dem Knoten zwischen der Laststrecke des Transistors T1 und dem Widerstand R21. Alternativ dazu kann der Abgriff an dem Knoten zwischen der Laststrecke des Transistors T1 und dem Widerstand R22 erfolgen, wie dies in Fig. 2 durch gestrichelte Linie dargestellt ist. Die Strommessung am Ende b der Teilnehmerschleife erfolgt mittels eines Signals CS2 über einen Widerstand R10 durch Abgriff an dem Knoten zwischen der Laststrecke des Transistors T2 und dem Widerstand R23. Alternativ dazu kann der Abgriff an dem Knoten zwischen der Laststrecke des Transistors T2 und dem Widerstand R24 erfolgen, wie dies in Fig. 2 durch gestrichelte Linie dargestellt ist. Die Signale CS1 und CS2 werden dem Schaltungsblock 25 beziehungsweise 26 in der Schaltung 21 beziehungsweise 22 zur weiteren Verarbeitung zugeführt.

In Fig. 2 werden die Laststrecken der Transistoren T1 und T2 durch die Signale OCP1 beziehungsweise OCP2 (overcurrent protection) gesteuert. Die Signale OCP1 und OCP2 werden von den Schaltungsblöcken 25 beziehungsweise 26 in den Schaltungen 21 beziehungsweise 22 ausgegeben. Das Signal OCP1 wird über einen Widerstand R6 dem Steueranschluß des Transistors T1 zugeführt, und das Signal OCP2 wird über einen Widerstand R8 dem Steueranschluß des Transistors T2 zugeführt. Der Steueranschluß des Transistors T1 ist ferner über einen hochohmigen Widerstand R5 mit der Batteriespannung V_{BAT} des Endes b der Teilnehmerleitung verbunden. Andererseits ist der Steueranschluß ferner über einen hochohmigen Widerstand R7 mit der Batteriespannung V_{H} des Endes a der Teilnehmerschleife verbunden. Mit Hilfe der Signale OCP1 und OCP 2 kann eine Überstromsteuerung auf der Teilnehmerschleife gewährleistet werdenn. Die Steuerung erfolgt durch Signale, die über Zeitmultiplex in den Signalen OUT1 und OUT2 den Schaltungsblöcken 25 beziehungsweise 26 zugeführt werden.

Von einer Schaltungsanordnung für den Teilnehmer-Leitungsabschluß in einer ISDN-Vermittlungsstelle (Linecard) sollen auf der Teilnehmerschleife zum Netzwerkabschluß NT des Teilnehmers sowohl bidirektional Daten als auch ein Fernspeisstrom übertragen werden. Dabei wird eine Speisegleichspannung von bis zu 110 Volt zwischen den beiden Enden a und b der Teilnehmerschleife angelegt. Diesem Pegel werden die Datensignale mit Pegeln von etwa 5 Volt (peak-to-peak) überlagert. Die vom Teilnehmer gesendeten Signale müssen wieder erkannt werden.

An die Ausgangs- und Eingangsstufe für die Signalübertragung werden hohe Anforderungen bezüglich Linearität, Unterdrückung von eigenen Störeinkopplungen, Gleichtaktunterdrückung und Spannungs- und Kurzschlußfestigkeit gestellt. Eine Vielzahl von Linecards wird in einem Schaltschrank der Vermittlungsstelle untergebracht. Die erlaubte Leistungsaufnahme der Linecards ist daher auf ein Minimum beschränkt.

Bisher realisierte ISDN-Linecards (siehe Fig. 3) trennen die Datenübertragung und die Fernspeisung mit Hilfe eines Transformators. Die Bauelemente für die Datenübertragung sind integrierte Halbleiterbauelemente, die mit Versorgungsspannungen von etwa 5 Volt betrieben werden. Die von den analogen Linecards bekannten Konzepte können nicht ohne weiteres auf ISDN-Linecards übertragen werden, weil bei ISDN andere Fernspeisungsanforderungen gelten. Die bekannten Konzepte würden zu einem übermäßigen Leistungsverbrauch führen. Dies liegt zum einen daran, daß bei analogen Linecards alle Signale von und zu den Niedervoltschaltungen eine hohe Spannungsdifferenz überwinden müssen. Auch bei relativ geringen Strömen werden hohe Verlustleistungen verursacht, da die Arbeitsströme stets über die volle Batteriespannung fließen. Andererseits sind in den Hochvoltschaltungen weit ausgesteuerte Transistoren erforderlich, um die hohen Linearitätsanforderungen des Ausgangssignals erfüllen zu können. Das Ausgangssignal muß daher eine relativ hohe Spannungsdifferenz zur Versorgungsspannung haben, über die sowohl der Speisestrom als auch der Signalstrom fließt.

Die Erfindung schlägt statt einer Hochvoltschaltung zwei Niedervoltschaltungen vor, die spannungsmäßig auf unterschiedlichen Pegeln betrieben werden. Die Spannungsdifferenz entspricht dabei der Speisespannung von bis zu 110 Volt. An jeder einzelnen Niedervoltschaltung liegt jedoch nur eine Versorgungsspannung von bis zu 6 Volt. Es können somit herkömmliche Halbleiterschaltungstechniken für die Niedervoltschaltungen zum Einsatz kommen. Jede Niedervoltschaltung treibt ein Ende der Teilnehmerschleife. Durch externe Bauelemente kann ein Überstromschutz gewährleistet werden.

Die Niedervoltschaltungen enthalten auf Seiten der Teilnehmerschleife einen Ausgangstreiber und einen Stromsensor. In einer Gabelschaltung wird aus dem Eingangsstrom der Anteil des Sendesignals möglichst stark gedämpft. Das Sendesignal wird aus einem Digitalsignal erzeugt. Die eigentliche Signalverarbeitung und -steuerung erfolgt in einer Digitalschaltung. Zwischen den Niedervoltschaltungen und der Digitalschaltung werden nur digitale Signale ausgetauscht. Die hohen Spannungsdifferenzen zwischen den Niedervoltschaltungen und der Digitalschaltung werden durch spannungsfeste Kondensatoren überbrückt, so daß an der Speisespannung keine Signalströme abfallen. Die Digitalsignale können dabei so codiert werden, daß sie gleichstromfrei die Isolationsbarriere aus Kondensatoren überwinden können.

Die Schaltungsanordnung der Erfindung weist eine Verlustleistung im Bereich der bisherigen Lösungen mit Transformatoren auf. Die Hochvoltanforderungen werden auf wenige handelsübliche diskrete Bauelemente begrenzt, die ihrerseits von den Niedervoltschaltungen gesteuert werden können.

## Patentansprüche

1. Schaltungsanordnung zum Speisen einer Telefonteilnehmerschleife (a, b) mit einer Speisespannung (V_{H} - V_{BAT}), zum Senden eines Sendesignals in die Telefonteilnehmerschleife (a, b) und zum Empfangen eines Empfangssignals von der Telefonteilnehmerschleife (a, b), wobei die Teilnehmerschleife eine erste Leitung (a) und eine zweite Leitung (b) aufweist, wobei die Schaltungsanordnung aufweist:
eine Speisespannungsquelle mit einer ersten Klemme (V_{H}) und einer zweiten Klemme (V_{BAT}), zwischen denen eine Speisespannung (V_{H} - V_{BAT}) liegt, **gekennzeichnet durch**:
eine erste Schaltung (1; 21), die mit der ersten Leitung (a) verbunden ist, wobei die erste Schaltung einen ersten und einen zweiten Versorgungsspannungsanschluß (V_{H}, V_{H-C}) aufweist;
und eine zweite Schaltung (2; 22), die mit der zweiten Leitung (b) verbunden ist, wobei die zweite Schaltung einen dritten und einen vierten Versorgungsspannungsanschluß (V_{BAT+C}, V_{BAT}) aufweist;
wobei der erste Versorgungsspannungsanschluß (V_{H}) mit der ersten Klemme verbunden ist und der vierte Versorgungsspannunganschluß (V_{BAT}) mit der zweiten Klemme verbunden ist.

2. Schaltungsanordnung nach Patentanspruch 1,
**dadurch gekennzeichnet, daß**
die Spannung zwischen dem ersten und dem zweiten Versorgungsspannungsanschluß (V_{H}, V_{H-C}) und die Spannung zwischen dem dritten und dem vierten Versorgungsspannungsanschluß (V_{BAT+C}, V_{BAT}) wesentlich kleiner als die Speisespannung (V_{H} - V_{BAT}) sind.

3. Schaltungsanordnung nach einem der vorhergehenden Patentansprüche
**dadurch gekennzeichnet, daß**
die erste und die zweite Schaltung (1, 2; 21, 22) jeweils eine Ausgangstreiberschaltung (3, 4; 23, T3, T4, 24, T5, T6) aufweisen, die mit der ersten Leitung (a) beziehungsweise mit der zweiten Leitung (b) verbunden sind.

4. Schaltungsanordnung nach einem der vorhergehenden Patentansprüche,
**dadurch gekennzeichnet, daß**
die erste Schaltung (1) und zweite Schaltung (2) jeweils eine Strommeßeinrichtung (5, 6) aufweisen, die den Strom auf der ersten Leitung (a) beziehungsweise auf der zweiten Leitung (b) messen und die gemessenen Werte ausgeben.

5. Schaltungsanordnung nach einem der vorhergehenden Patentansprüche,
**dadurch gekennzeichnet, daß**
die erste und die zweite Schaltung (21, 22) jeweils ein Steuersignal (OCP1, OCP2) zum Steuern des Stroms auf der ersten und der zweiten Leitung (a, b) liefern.

6. Schaltungsanordnung nach einem der vorhergehenden Patentansprüche
**dadurch gekennzeichnet, daß**
die erste und die zweite Schaltung (1, 2; 21, 22) ein erstes beziehungsweise ein zweites Eingangssignal (IN1, IN2) ausgeben, das dem Empfangssignal von der Telefonteilnehmerleitung entpricht, und ein erstes beziehungsweise ein zweites Ausgangssignal (OUT1, OUT2) empfangen, das dem Sendesignal in die Telefonteilnehmerleitung entspricht.

7. Schaltungsanordnung nach einem der vorhergehenden Patentansprüche,
**dadurch gekennzeichnet, daß**
das erste und das zweite Eingangssignal (IN1, IN2) und das erste und das zweite Ausgangssignal (OUT1, OUT2) digitale Signale sind.

8. Schaltungsanordnung nach einem der vorhergehenden Patentansprüche,
**dadurch gekennzeichnet, daß**
die erste Schaltung (1) einen ersten Analog-Digital-Wandler (9) zur Erzeugung des ersten Eingangssignals (IN1) und einen einen ersten Digital-Analog-Wandler (11) zur Aufnahme des ersten Ausgangssignals (OUT1) aufweist und die zweite Schaltung (2) einen zweiten Analog-Digital-Wandler (10) zur Erzeugung des zweiten Eingangssignals (IN2) und einen einen zweiten Digital-Analog-Wandler (12) zur Aufnahme des zweiten Ausgangssignals (OUT2) aufweist

9. Schaltungsanordnung nach einem der vorhergehenden Patentansprüche,
**dadurch gekennzeichnet, daß**
die erste Schaltung (1; 21) und die zweite Schaltung (2; 22) identisch aufgebaut sind.

10. Schaltungsanordnung nach einem der vorhergehenden Patentansprüche,
**gekennzeichnet durch**
eine dritte Schaltung (14), die mit der ersten Schaltung (1) und der zweiten Schaltung (2) auf galvanisch getrennte Weise verbunden ist.

11. Schaltungsanordnung nach Patentanspruch 10,
**dadurch gekennzeichnet, daß**
die galvanisch getrennte Verbindung zwischen der ersten Schaltung (1) und der dritten Schaltung (14) und zwischen der zweiten Schaltung (2) und der dritten Schaltung (14) durch Kondensatoren (C1, C2, C3, C4) erfolgt.

12. Schaltungsanordnung nach einem der Patentansprüche 10 oder 11,
**dadurch gekennzeichnet, daß**
die dritte Schaltung (14) eine Steuereinrichtung (18) aufweist, die die erste, zweite und dritte Schaltung (1, 2, 14) steuert.

13. Schaltungsanordnung nach Patentanspruch 12,
**dadurch gekennzeichnet, daß**
die Steuerung der ersten und der zweiten Schaltung (1, 2) durch Zeitmultiplex im ersten und zweiten Ausgangssignal (OUT1, OUT2) erfolgt.

14. Schaltungsanordnung nach einem der Patentansprüche 10 bis 13,
**dadurch gekennzeichnet, daß**
die dritte Schaltung (14) eine Echolöscheinrichtung (15, 16, 18) aufweist.

15. Schaltungsanordnung nach einem der Patentansprüche 10 bis 14,
**dadurch gekennzeichnet, daß**
die dritte Schaltung (14) eine Codierschaltung (19) zum Codieren der Ausgangssignale (OUT1, OUT2) aufweist.

16. Schaltungsanordnung nach einem der Patentansprüche 10 bis 15,
**dadurch gekennzeichnet, daß**
die Steuereinrichtung (18) der dritten Schaltung (14) eine Arbeitspunktregelung der Schaltungselemente der Schaltungsanordnung bei sich ändernder Stromaufnahme des fernen Netzabschlusses auf der Teilnehmerschleife (a, b) bewirkt.

17. Verwendung der Schaltungsanordnung nach einem der vorhergehenden Patentansprüche für den netzwerkseitigen Abschluß einer Telefonteilnehmerschleife für ISDN mit den Leitungscodierungen 2B1Q, 4B3T, Up0, für das ISDN S-Interface, für ADSL, MDSL, HDSL, SDSL, VDSL.

18. Chipsatz zum Speisen einer Telefonteilnehmerschleife (a, b) mit einer Speisespannung (V_{H} - V_{BAT}), zum Senden eines Sendesignals in die Telefonteilnehmerschleife (a, b) und zum Empfangen eines Empfangssignals von der Telefonteilnehmerschleife (a, b), wobei die Teilnehmerschleife eine erste Leitung (a) und eine zweite Leitung (b) aufweist, wobei der Chipsatz **gekenzeichnet** ist **durch:**
einen ersten Chip (1), der mit der ersten Leitung (a) verbindbar ist, ein erstes Eingangssignal (IN1) ausgibt und ein erstes Ausgangssignal (OUT1) empfängt;
einen zweiten Chip (2), der mit der zweiten Leitung (b) verbindbar ist, ein zweites Eingangssignal (IN2) ausgibt und ein zweites Ausgangssignal (OUT2) empfängt;
wobei der erste und der zweite Chip (1, 2) identisch sind und eine Versorgungsspannung erfordern, die wesentlich niedriger als die Speisespannung (V_{H} - V_{BAT}) ist.

19. Chipsatz nach Patentanspruch 18,
**gekennzeichnet durch**
einen dritten Chip (14), der das erste und das zweite Eingangssignal (IN1, IN2) empfängt und das erste und das zweite Ausgangssignal (OUT1, OUT2) ausgibt.

20. Chipsatz nach Patentanspruch 19,
**dadurch gekennzeichnet, daß**
der dritte Chip (14) eine Echolöscheinrichtung (15, 16, 18) aufweist.

21. Chipsatz nach einem der Patentansprüche 19 oder 20,
**dadurch gekennzeichnet, daß**
der dritte Chip eine Ein-/Ausgabe-Einrichtung (18) für einen PCM-Bus (IOM) aufweist.

## Claims

1. Circuit arrangement for feeding a telephone subscriber loop (a, b) with a feed voltage (V_{H} - V_{BAT}), for transmission of a transmission signal to the telephone subscriber loop (a, b) and for reception of a received signal from the telephone subscriber loop (a, b), with the subscriber loop having a first line (a) and a second line (b), and with the circuit arrangement having:
a feed voltage source with a first terminal (V_{H}) and a second terminal (V_{BAT}), between which a feed voltage (V_{H}-V_{BAT}) is produced,
**characterized by**:
a first circuit (1; 21) which is connected to the first line (a), with the first circuit having a first and a second supply voltage connection (V_{H}, V_{H-C});
and a second circuit (2; 22), which is connected to the second line (b), with the second circuit having a third and a fourth supply voltage connection (V_{BAT+C}, V_{BAT});
and with the first supply voltage connection (V_{H}) being connected to the first terminal, and the fourth supply voltage connection (V_{BAT}) being connected to the second terminal.

2. Circuit arrangement according to Patent Claim 1,
**characterized in that**
the voltage between the first and second supply voltage connection (V_{H}, V_{H-C}) and the voltage between the third and the fourth supply voltage connection (V_{BAT-C}, V_{BAT}) are considerably less than the feed voltage (V_{H} - V_{BAT}).

3. Circuit arrangement according to one of the preceding patent claims,
**characterized in that**
the first and second circuit (1, 2; 21, 22) each have an output driver circuit (3, 4; 23, T3, T4, 24, T5, T6), and the output driver circuits are connected to the first line (a) and to the second line (b).

4. Circuit arrangement according to one of the preceding patent claims,
**characterized in that**
the first circuit (1) and the second circuit (2) each have a current measurement device (5, 6), which devices measure the current on the first (a) and on the second line (b), respectively, and emit the measured values.

5. Circuit arrangement according to one of the preceding patent claims,
**characterized in that**
the first and the second circuit (21, 22) respectively produce a control signal (OCP1, OCP2) for controlling the current on the first and on the second line (a, b).

6. Circuit arrangement according to one of the preceding patent claims,
**characterized in that**
the first and the second circuit (1, 2; 21, 22) emit a first and a second input signal (IN1, IN2) which corresponds to the signal received from the telephone subscriber line, and receive a first and a second output signal (OUT1, OUT2) respectively, which corresponds to the transmission signal into the telephone subscriber line.

7. Circuit arrangement according to one of the preceding patent claims,
**characterized in that**
the first and the second input signal (IN1, IN2) and the first and the second output signal (OUT1, OUT2) are digital signals.

8. Circuit arrangement according to one of the preceding patent claims,
**characterized in that**
the first circuit (1) has a first analog/digital converter (9) for production of the first input signal (IN1), and has a first digital/analog converter (11) for reception of the first output signal (OUT1), and the second circuit (2) has a second analog/digital converter (10) for production of the second input signal (IN2), and has a second digital/analog converter (12) for reception of the second output signal (OUT2).

9. Circuit arrangement according to one of the preceding patent claims,
**characterized in that**
the first circuit (1; 21) and the second circuit (2; 22) are identical.

10. Circuit arrangement according to one of the preceding patent claims,
**characterized by**
a third circuit (14), which is connected with DC isolation to the first circuit (1) and to the second circuit (2).

11. Circuit arrangement according to Patent Claim 10,
**characterized in that**
the DC-isolated connection between the first circuit (1) and the third circuit (14) and between the second circuit (2) and the third circuit (14) is provided by capacitors (C1, C2, C3, C4).

12. Circuit arrangement according to one of Patent Claims 10 or 11,
**characterized in that**
the third circuit (14) has a control device (18) which controls the first, the second and the third circuit (1, 2, 14).

13. Circuit arrangement according to Patent Claim 12,
**characterized in that**
the first and the second circuit (1, 2) are controlled by time-division multiplexing in the first and the second output signal (OUT1, OUT2).

14. Circuit arrangement according to one of Patent Claims 10 to 13,
**characterized in that**
the third circuit (14) has an echo cancellation device (15, 16, 18).

15. Circuit arrangement according to one of Patent Claims 10 to 14,
**characterized in that**
the third circuit (14) has a coding circuit (19) for coding the output signals (OUT1, OUT2).

16. Circuit arrangement according to one of Patent Claims 10 to 15,
**characterized in that**
the control device (18) for the third circuit (14) controls the operating point of the circuit elements in the circuit arrangement when the current drawn by the remote network termination on the subscriber loop (a, b) changes.

17. Use of the circuit arrangement according to one of the preceding patent claims for the network-end termination of a telephone subscriber loop for ISDN with the line codings 2B1Q, 4B3T, Up0, for ISDN S interface, for ADSL, MDSL, HDSL, SDSL, VDSL.

18. Chipset for feeding a telephone subscriber loop (a, b) with a feed voltage (V_{H} - V_{BAT}), for transmission of a transmission signal into the telephone subscriber loop (a, b) and for reception of a received signal from the telephone subscriber loop (a, b), with the subscriber loop having a first line (a) and a second line (b), and with the chipset being
**characterized by**:
a first chip (1) which can be connected to the first line (a), emits a first input signal (IN1) and receives a first output signal (OUT1);
a second chip (2), which can be connected to the second line (b), emits a second input signal (IN2) and receives a second output signal (OUT2);
with the first and the second chip (1, 2) being identical, and requiring a supply voltage which is considerably lower than the feed voltage (V_{H} - V_{BAT}).

19. Chipset according to Patent Claim 18,
**characterized by**
a third chip (14), which receives the first and the second input signal (IN1, IN2) and emits the first and the second output signal (OUT1, OUT2).

20. Chipset according to Patent Claim 19,
**characterized in that**
the third chip (14) has an echo cancellation device (15, 16, 18).

21. Chipset according to one of Patent Claims 19 or 20,
**characterized in that**
the third chip has an input/output device (18) for a PCMbus (IOM).

## Revendications

1. Agencement de circuits pour l'alimentation d'une boucle d'abonné (a, b) avec une tension d'alimentation (V _{H} - V _{BAT}), pour émettre un signal d'émission dans la boucle d'abonné téléphonique (a, b) et pour réceptionner un signal de réception à partir de la boucle d'abonné téléphonique (a, b), la boucle d'abonné étant dotée d'une première ligne (a) et d'une seconde ligne (b), l'agencement de circuit étant doté :
d'une source de tension d'alimentation avec une première borne (V _{H}) et une seconde borne (V _{BAT}), entre lesquelles est appliquée une tension d'alimentation ( V _{H} - V _{BAT}, **caractérisé par**
un premier circuit (1 ; 21) qui est relié à la première ligne (a), le premier circuit étant doté d'une première et d'une seconde connexion de tension d'alimentation (V _{H}, V _{H-C}); c);
et un second circuit (2 ; 22), qui est relié à la seconde ligne (b),le second circuit étant doté d'une troisième et d'une quatrième connexion de tension d'alimentation (V _{BAT-C}, V _{BAT});
la première connexion de tension d'alimentation (V _{H}) étant reliée à la premier borne et la quatrième connexion de tension d'alimentation (V _{BAT}) étant reliée à la seconde borne.

2. Agencement de circuits selon la revendication 1, **caractérisé en ce que** la tension entre la première et la seconde connexion de tension d'alimentation (V _{H}, V _{H-C}) et la tension entre la troisième et la quatrième connexion de tension d'alimentation (V _{BAT+C}, V _{BAT}) sont nettement inférieures à la tension d'alimentation (V _{H} - V _{BAT}).

3. Agencement de circuits selon l'une quelconque des revendications précédentes, **caractérisé en ce que** le premier et le second circuit (1, 2 ; 21, 22) sont dotés chacun d'un circuit excitateur de sortie (3, 4 ; 23, T3, T4, 24, T5, T6), qui sont reliés avec la première ligne (a) ou avec la seconde ligne (b).

4. Agencement de circuits selon l'une quelconque des revendications précédentes, **caractérisé en ce que** le premier circuit (1) et le second circuit (2) sont dotés chacun d'un dispositif de mesure du courant (5, 6) qui mesurent le courant sur la première ligne (a) ou sur la seconde ligne (b) et qui éditent les valeurs mesurées.

5. Agencement de circuits selon l'une quelconque des revendications précédentes, **caractérisé en ce que** le premier et le second circuit (21, 22) fournissent chacun un signal de commande (OCP1, OCP2) pour piloter le courant sur la première et sur la seconde ligne (a, b).

6. Agencement de circuits selon l'une quelconque des revendications précédentes, **caractérisé en ce que** le premier et le second circuit (1, 2 ; 21, 22) délivrent un premier ou un second signal d'entrée (IN1, IN2), qui correspond au signal de réception de la ligne d'abonné téléphonique et réceptionnent un premier ou un second signal de sortie (OUT1, OUT2), qui correspond au signal d'émission dans la ligne d'abonné téléphonique.

7. Agencement de circuits selon l'une quelconque des revendications précédentes, **caractérisé en ce que** le premier et le second signal d'entrée (IN1, IN2) et le premier et le second signal de sortie (OUT1, OUT2) sont des signaux numériques.

8. Agencement de circuits selon l'une quelconque des revendications précédentes, **caractérisé en ce que** le premier circuit (1) est doté d'un premier convertisseur analogique/numérique (9) pour générer le premier signal d'entrée (IN1) et d'un premier convertisseur numérique/analogique (11) pour réceptionner le premier signal de sortie (OUT1) et que le second circuit (2) est doté d'un second convertisseur analogique/numérique (10) pour générer le second signal d'entrée (IN2) et d'un second convertisseur numérique/analogique (12), pour réceptionner le second signal de sortie (OUT2).

9. Agencement de circuits selon l'une quelconque des revendications précédentes, **caractérisé en ce que** le premier circuit (1 ; 21) et le second circuit (2 ; 22) sont de conception identique.

10. Agencement de circuits selon l'une quelconque des revendications précédentes, **caractérisé par** un troisième circuit (14) relié avec le premier circuit (1) et avec le second circuit (2) de façon galvaniquement séparée.

11. Agencement de circuits selon la revendication 10, **caractérisé en ce que** la liaison galvaniquement séparée entre le premier circuit (1) et le troisième circuit (14) et entre le second circuit (2) et le troisième circuit (14) est assurée par des condensateurs (C1, C2, C3, C4).

12. Agencement de circuits selon l'une quelconque des revendications 10 ou 11, **caractérisé en ce que** le troisième circuit (14) est doté d'un dispositif de commande qui pilote le premier, le second et le troisième circuit (1, 2, 14).

13. Agencement de circuits selon la revendication 12, **caractérisé en ce que** la commande du premier et du second circuit (1, 2) est assurée par multiplexage temporel dans le premier et dans le second signal de sortie (OUT1, OUT2).

14. Agencement de circuits selon l'une quelconque des revendications 10 à 13, **caractérisé en ce que** le troisième circuit (14) est doté d'un dispositif de suppression d'écho (15, 16, 18).

15. Agencement de circuits selon l'une quelconque des revendications 10 à 14, **caractérisé en ce que** le troisième circuit (14) est doté d'un circuit de codage (19) pour coder les signaux de sortie (OUT1, OUT2).

16. Agencement de circuits selon l'une quelconque des revendications 10 à 15, **caractérisé en ce que** le dispositif de commande (18) du troisième circuit (14) provoque un réglage du point de fonctionnement des éléments de circuit de l'agencement de circuits lorsque le courant absorbé se modifie sur la terminaison de réseau éloignée sur la boucle d'abonné (a, b).

17. Utilisation de l'agencement de circuits selon l'une quelconque des revendications précédentes pour la terminaison côté réseau d'une boucle d'abonné téléphonique pour RNIS avec les codages de lignes 2B1Q, 4B3T, Up0 pour l'interface S RNIS, pour l'ADSL, le MDSL, le HDSL, le SDSL, le VDSL.

18. Jeu de puces pour l'alimentation d'une boucle d'abonné téléphonique (a, b), avec une tension d'alimentation (V _{H} - V _{BAT}) pour émettre un signal d'émission dans la boucle d'abonné téléphonique (a, b) et pour réceptionner un signal de réception à partir de la boucle d'abonné téléphonique (a, b), la boucle d'abonné étant dotée d'une première ligne (a) et d'une seconde ligne (b), le jeu de puces étant **caractérisé par**
une première puce (1), qui est reliée avec la première ligne (a), qui délivre un premier signal d'entrée (IN1) et qui réceptionne un premier signal de sortie (OUT1),
une seconde puce (2), qui peut être reliée avec la seconde ligne (b), qui délivre un second signal d'entrée (IN2) et qui réceptionne un second signal de sortie (OUT2) ;
la première et la seconde puce (1, 2) étant identiques et requérant une tension d'alimentation qui est nettement inférieure à la tension d'alimentation (V _{H} - V _{BAT}).

19. Jeu de puces selon la revendication 18, **caractérisé par** une troisième puce (14), qui réceptionne le premier et le second signal d'entrée (IN1, IN2) et qui délivre le premier et le second signal de sortie (OUT1, OUT2).

20. Jeu de puces selon la revendication 19, **caractérisé en ce que** la troisième puce (14) est dotée d'un dispositif de suppression d'écho (15, 16, 18).

21. Jeu de puces selon l'une quelconque des revendications 19 ou 20, **caractérisé en ce que** la troisième puce est dotée d'un dispositif de saisie / d'édition (18) pour un bus PCM.
